# FASCICULE DE BREVET EUROPEEN

(11) **EP 4 104 674 B1**
(45) Date de publication et mention de la délivrance du brevet: **29.01.2025**
(21) Numéro de dépôt: 22305882.7
(22) Date de dépôt: 17.06.2022
(51) Int. Cl.: A01G 13/06, A01G 13/08

(54) **MODULE POUR LA PROTECTION D'UNE SURFACE CULTIVÉE CONTRE LE GEL**
MODUL ZUM SCHUTZ EINER ANGEBAUTEN FLÄCHE GEGEN FROST
MODULE FOR PROTECTING A CULTIVATED SURFACE AGAINST FREEZING

(30) Priorité: 18.06.2021 FR 2106499
(43) Date de publication de la demande: 21.12.2022
(73) Titulaire: Perrinet, Pierre, 33110 Le Bouscat (FR); Ferrier, Philippe, 33560 Carbon-Blanc (FR)
(72) Inventeur: Perrinet, Pierre, 33110 Le Bouscat (FR); Ferrier, Philippe, 33560 Carbon-Blanc (FR)
(74) Mandataire: Plasseraud IP

(56) Documents cités:
- DE-B- 1 012 109
- FR-A- 1 435 135
- JP-A- H08 242 707
- US-B1- 6 257 498

## Description

### Domaine technique

L'invention relève du domaine général de la protection des surfaces cultivées contre les gelées printanières, en particulier des parcelles de vignes ou encore des vergers.

Elle concerne notamment un module transportable pour la protection d'une surface cultivée contre le gel.

### Technique antérieure

Les gelées de printemps, notamment dans les vignobles, ont des conséquences néfastes sur la production. En effet, à cette période, les bourgeons se forment et une gelée peut endommager, voire détruire, tout ou partie des bourgeons.

Diverses solutions techniques pour protéger des surfaces cultivées en période de gel, par exemple, la nuit, ont donc été développées pour tenter de limiter l'impact de ces gelées.

Sur de petites parcelles, il est connu d'utiliser des chaufferettes ou des bougies qui sont placées entre les rangs de vignes et allumées pour plusieurs heures.

En réchauffant l'air, ces bougies sont ainsi efficaces jusqu'à des températures extérieures de l'ordre de -4°C.

Toutefois, il faut compter plusieurs centaines de bougies pour protéger une parcelle d'un (1) hectare. Outre le coût élevé d'une telle solution, il faut également disposer d'une main d'œuvre importante pour préparer et allumer les bougies.

Il est également connu de mettre le feu à de la paille humide dans le but de générer un maximum de fumée au lever du soleil. Cette technique de l'enfumage vise à créer un nuage artificiel pour filtrer les rayons du soleil et protéger les bourgeons gelés.

En assurant un mélange de couches d'air chaud présentes en altitude avec la couche d'air froid présente au sol, les éoliennes protègent de manière simple et efficace des surfaces cultivées contre le gel.

Toutefois, ces éoliennes sont coûteuses et complexes à entretenir.

Elles sont, de plus, inopérantes lorsque les températures sur les zones de culture descendent en-dessous d'environ -4°C.

Par ailleurs, ces éoliennes, ou tours antigel, nécessitent des fondations au sol et sont donc fixes.

Elles sont typiquement placées, compte tenu de leur encombrement, en périphérie des parcelles cultivées, et donc dans des zones dépourvues de culture.

On constate qu'elles sont à l'origine d'une pollution visuelle et sonore.

En outre, et bien que les zones gélives soient quasi identiques d'une année sur l'autre, on peut toutefois observer de légères variations ou déplacements de ces zones, voire la création de nouvelles zones géographiques soumises au gel.

L'efficacité de telles éoliennes peut dès lors s'en trouver diminuée puisqu'elles sont fixes.

Dans le même objectif, il est également connu de mettre en œuvre des hélicoptères, leur déploiement au-dessus de parcelles identifiées permettant de rabattre les couches d'air chaud au sol.

Toutefois, les hélicoptères ne peuvent intervenir que lorsque les conditions météorologiques le permettent.
Ils nécessitent également des pilotes aguerris et une préparation de vol en amont importante.

On connaît également des systèmes de brumisation de vignes qui sont activés pendant des alertes au gel. La transformation de l'eau en glace produit de l'énergie et permet donc de réchauffer temporairement les vignes.

Néanmoins, leur mise en place est assez complexe et peut entraîner des dégâts importants lorsque ces systèmes sont mal maîtrisés.

Il existe donc un besoin pressant pour un dispositif de protection contre le gel, dont la conception originale permette de surmonter les inconvénients ci-dessus mentionnés.

DE 10 12 109 B, JP H08 242707 A et US 6 257 498 B1 illustrent cet état de l'art antérieur.

### Objet de l'invention

La présente invention vise un module pour la protection contre le gel de surfaces cultivées telles que des vignes, des arbres fruitiers, etc..., simple dans sa conception et dans son mode opératoire, peu onéreux et autorisant une mise en position très aisée au plus près des arbres ou arbustes à protéger.

De manière avantageuse, un tel module transportable permet aussi une prise en compte des variations annuelles dans l'extension géographique des zones gélives.

Un objet de la présente invention est un tel module compact, d'un transport et d'un stockage aisés, et cependant d'une grande stabilité opérationnelle.

Un autre objet de la présente invention est un tel module générant un flux d'air propulsé alimenté en air chaud à titre principal ou à titre auxiliaire par une source autonome placée au sol.

### Exposé de l'invention

A cet effet, l'invention concerne un module pour la protection d'une surface cultivée contre le gel, telle que des vignes ou des vergers, ladite surface cultivée comprenant des rangs d'arbres ou d'arbustes espacés les uns des autres d'une distance d, dénommée inter-rang, ledit module comprenant :
- un châssis transportable, dimensionné pour permettre son passage dans l'inter-rang, ledit châssis comprenant une surface d'appui au sol et des jambes d'appui mobiles entre une position déployée dans laquelle elles sont en contact avec le sol pour stabiliser ledit châssis et une position relevée lorsque le module doit être déplacé vers un autre lieu,
- ledit châssis supportant un mât, ou une table élévatrice, à l'extrémité libre duquel, ou respectivement de laquelle, est placé un dispositif de génération d'un flux d'air guidé, et
- ledit châssis comprenant un générateur d'air chaud, ledit générateur d'air chaud étant relié et en communication de fluide avec un conduit d'alimentation, dont l'extrémité supérieure est directement connectée à l'entrée d'air, ou à la sortie d'air, dudit dispositif de génération d'un flux d'air guidé pour alimenter ce dernier en air chaud, ou encore débouche au niveau de ladite entrée d'air, ou respectivement de ladite sortie d'air, de manière à assurer un mélange d'air frais et chaud au niveau de l'entrée d'air, ou respectivement de ladite sortie d'air, dudit dispositif de génération d'un flux d'air.

Le présent module qui est compact, peut être transporté par un engin motorisé tel qu'un tracteur, entre les rangs d'arbres ou d'arbustes pour être placé directement au cœur de la zone à protéger.

De manière avantageuse, la hauteur du mât est ajustable, par exemple par démontage ou repliement, pour assurer un déplacement plus aisé du module.

Ce module est ainsi transportable en étant d'une mise en position/retrait facile de manière à libérer rapidement la surface cultivée en cas d'intervention sur les arbres ou arbustes cultivés (traitement, taille, ...).

Avantageusement, les jambes d'appui du châssis permettent de maintenir stable ce dernier dans une position horizontale ou sensiblement à l'horizontal, lorsque ce dernier est posé sur un sol plan. On peut ainsi s'assurer que le mât porté par le châssis est perpendiculaire ou sensiblement perpendiculaire à la surface du sol.

Un tel module transportable pourrait encore être mis en œuvre utilement pour augmenter durant la floraison de cultures, les rendements de production ou sécher des fruits ou végétaux lors de période de pluie.

Selon un mode de réalisation particulier de ce module de protection contre le gel, il est configuré de sorte que ledit dispositif de génération d'un flux d'air guidé est mobile en rotation sur une plage d'angles de rotation comprise entre 0° et 120°, encore mieux entre 0° et 180°, et de manière encore plus préférentielle, entre 0° et 360° autour de l'axe du mât ou d'un axe principal de ladite table élévatrice.

A titre d'exemple, la mise en rotation du dispositif de génération d'un flux d'air guidé est assurée par une couronne rotative motorisée.

De préférence, la vitesse de rotation du dispositif de génération d'un flux d'air guidé autour de l'axe du mât est variable. A titre purement illustratif, ce dispositif de génération d'un flux d'air guidé effectue un tour complet autour de l'axe du mât en une durée comprise entre une (1) minute et dix (10) minutes.

Cette vitesse de rotation est par exemple programmable.

Selon un autre mode de réalisation particulier de ce module de protection contre le gel, le dispositif de génération d'un flux d'air guidé est un ventilateur hélicoïde.

Il présente de préférence un débit d'air important et par exemple supérieur ou égal à 35 000 m³/h.

Selon un autre mode de réalisation particulier de ce module de protection contre le gel, ledit dispositif de génération d'un flux d'air guidé est inclinable.

Par exemple, le dispositif de génération d'un flux d'air guidé est relié au mât par un mécanisme autorisant son inclinaison afin d'orienter le jet d'air plus ou moins vers le bas. Cet angle d'inclinaison est par exemple compris entre 0° et 10° par rapport à l'axe du mât.

De manière avantageuse, le conduit d'alimentation est alors flexible et dimensionné pour suivre ledit dispositif de génération d'un flux d'air guidé dans son déplacement. Il peut s'agir par exemple d'une gaine souple.

Selon encore un autre mode de réalisation particulier de ce module de protection contre le gel, le conduit d'alimentation est de préférence isolé thermiquement.

Selon encore un autre mode de réalisation particulier de ce module de protection contre le gel, ce châssis formant un caisson ouvert, ledit générateur d'air chaud est placé à l'intérieur dudit caisson.

La stabilité du module est ainsi renforcée et son encombrement réduit.

De préférence, ce générateur d'air chaud est avantageusement capable de générer une puissance thermique supérieure à 100 kW, et encore mieux supérieure à 200 kW, et de manière encore plus préférentielle, supérieure à 300 kW. Un tel mode de réalisation garantie un apport de calories important dans le flux d'air éjecté par le ventilateur.

Selon encore un autre mode de réalisation particulier de ce module de protection contre le gel, ledit générateur d'air chaud comporte une source de chaleur et au moins un ventilateur pour assurer un échange thermique entre l'air brassé par ledit au moins un ventilateur et ladite source de chaleur.

Bien entendu, ledit au moins un ventilateur du générateur d'air chaud est distinct du dispositif de génération d'un flux d'air guidé.

Selon encore un autre mode de réalisation particulier de ce module de protection contre le gel, ladite source de chaleur est choisie dans le groupe comprenant un échangeur, un brûleur ou un élément électrique chauffant.

Selon encore un autre mode de réalisation particulier de ce module de protection contre le gel, ledit châssis comporte au moins une source d'alimentation en énergie embarquée pour alimenter au moins ledit générateur d'air chaud de sorte que ledit module est autonome.

De préférence, ladite source de chaleur étant un brûleur, ledit module comprend un réservoir pour stocker un combustible, tel que du fuel ou du gaz, destiné à alimenter ce brûleur.

De manière avantageuse, ladite source de chaleur étant un brûleur à bois, ledit module de protection contre le gel comporte un réservoir à bois tel qu'un silo pour le stockage de granulés et/ou de ceps de vigne.

De manière préférentielle, ladite source de chaleur étant un brûleur, ledit brûleur comprenant au moins un port de sortie des gaz de combustion, ledit au moins un port de sortie est relié au conduit d'alimentation de sorte que les gaz de combustion sont directement envoyés dans ledit conduit.

Un tel mode de réalisation permet d'optimiser les performances énergétiques du générateur d'air chaud.

Il pourrait encore s'agir d'un groupe électrogène autonome pour alimenter le ventilateur et éventuellement le moteur électrique assurant l'entrainement en rotation de ce ventilateur autour de l'axe du mât.

Selon encore un autre mode de réalisation particulier de ce module de protection contre le gel, ladite surface d'appui est dimensionnée pour assurer le non-enfoncement dudit module sur des sols instables.

On entend par "sols instables", des sols tels que des sois boueux, détrempés, ...

Selon encore un autre mode de réalisation particulier de ce module de protection contre le gel, ledit châssis comprend au moins deux évidements longitudinaux destinés à recevoir chacun un organe de déplacement dudit module.

On entend par "évidement longitudinal" que cet évidement a un axe longitudinal qui est parallèle ou sensiblement parallèle à l'axe principal du châssis. L'organe de transport est donc placé de manière à supporter ce châssis durant le déplacement du module. Ces organes de déplacement peuvent être constitués par les fourches d'un tracteur.

Bien entendu, chacun de ces évidements longitudinaux étant destiné à recevoir une de ces fourches, la distance séparant ces au moins deux évidements correspond sensiblement à l'écartement entre les fourches du tracteur.

De préférence, ces évidements débouchant ou non sont placés dans la partie inférieure du corps principal pour faciliter la manutention du module.

De préférence, lesdits évidements sont débouchant pour permettre la manutention dudit module par deux côtés opposés du châssis.

Selon encore un autre mode de réalisation particulier de ce module de protection contre le gel, le dispositif de génération d'un flux d'air guidé est un ventilateur ou comporte une ou plusieurs micro-turbines.

De préférence, ledit ventilateur est un ventilateur à vitesse variable.

Selon encore un autre mode de réalisation particulier de ce module de protection contre le gel, il comporte au moins un dispositif d'injection d'un liquide ou d'un mélange de liquides dans l'air éjecté par le ventilateur sous forme de gouttelettes, avant l'éjection de cet air chaud. A titre purement illustratif, ce liquide peut être de l'eau ou un additif.

Selon encore un autre mode de réalisation particulier de ce module de protection contre le gel, la hauteur dudit mât ou de ladite table élévatrice est déterminée de sorte que ledit dispositif de génération d'un flux d'air guidé est placé au-dessus des arbres ou arbustes de ladite surface cultivée.

De préférence, le mât présente une hauteur d'au moins trois (3) mètres, encore mieux d'au moins cinq (5) mètres et de manière encore plus préférentielle supérieure ou égale à six (6) mètres. Bien entendu, la hauteur du châssis est prise en compte.

Selon encore un autre mode de réalisation particulier de ce module de protection contre le gel, ledit mât est un mât télescopique.

La présente invention concerne également une installation pour le traitement d'une surface cultivée comprenant une pluralité de modules tels que décrits précédemment.

Ces modules sont avantageusement disposés en réseau pour assurer une couverture géographique optimale de la surface cultivée à protéger.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

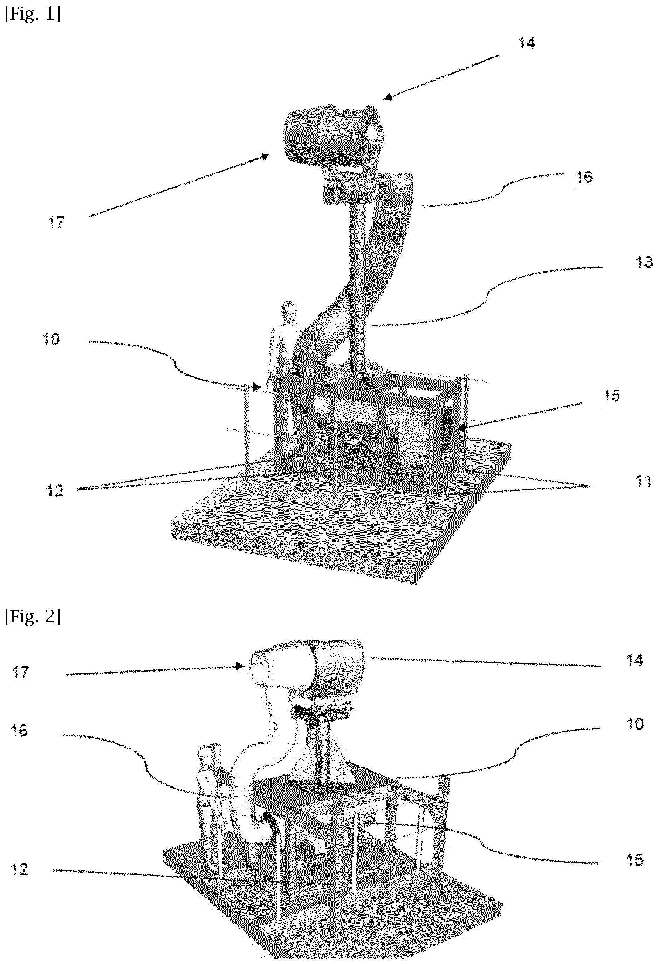

   [Fig. 1] est une vue en perspective d'un module de protection contre le gel selon un premier mode de réalisation de la présente invention ;
**Fig. 2**
   [Fig. 2] est une vue en perspective d'un module de protection contre le gel selon un second mode de réalisation de la présente invention.
**Fig. 3**

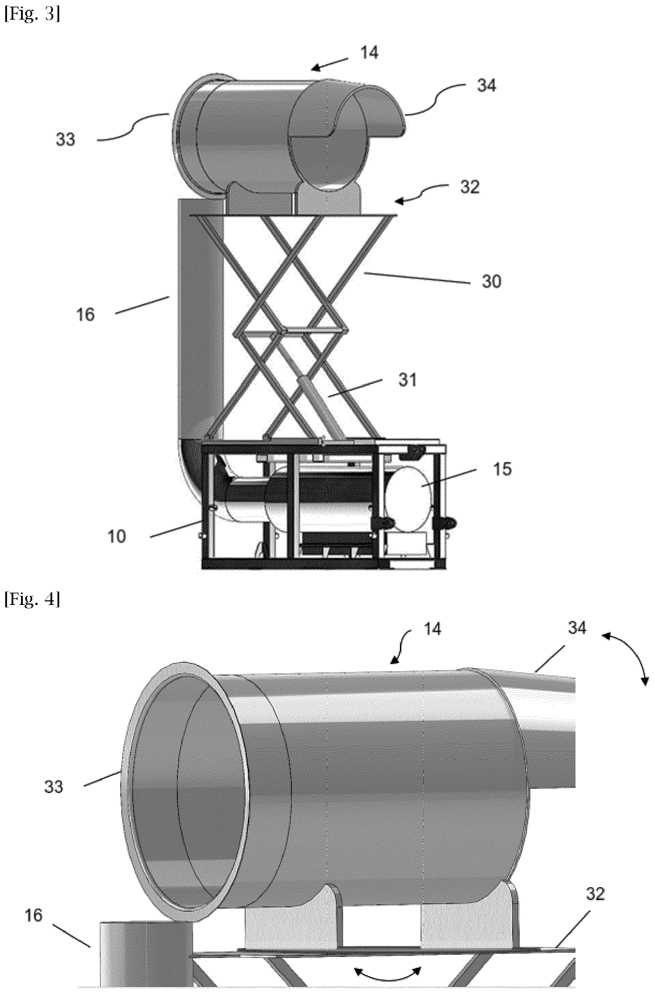

   [Fig. 3] est une vue en perspective d'un module de protection contre le gel selon un troisième mode de réalisation de la présente invention ;
**Fig. 4**
   [Fig. 4] est une vue élargie et partielle du module de protection contre le gel de la Fig. 3 montrant le ventilateur avec son pavillon d'aspiration.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

La Figure 1 représente schématiquement un module autonome pour la protection d'une surface cultivée contre le gel selon un premier mode de réalisation de la présente invention.

Un tel module autonome est, par exemple, destiné à la protection de plants de vigne contre les gelées printanières, mais il pourrait également être mis en œuvre utilement pour la protection hivernale et printanière d'autres espèces végétales.

Ce module comporte un châssis 10 ouvert, formé d'un assemblage de tubes de section rectangulaire, ce châssis étant dimensionné pour permettre son passage entre les rangs de vignes.

Dans la partie inférieure de ce châssis 10, des tubes comportent des ouvertures 11 pour recevoir les fourches d'un tracteur et permettre ainsi la manipulation du châssis 10 et son transport dans l'inter-rang.

Ce châssis 10 comprend une surface d'appui au sol ainsi que des jambes d'appui 12 qui sont mobiles entre une position déployée, dans laquelle elles sont en contact avec le sol pour stabiliser ce châssis 10, et une position relevée autorisant le transport et le déplacement du module vers un autre lieu.

La partie supérieure du châssis 10 supporte un mât 13 à l'extrémité libre duquel est monté un ventilateur axial 14 qui peut tourner autour de ce mât. Ce ventilateur axial 14 comprend une entrée d'air.

Ce mât 13 présente ici une hauteur de six (6) mètres pour assurer le positionnement de l'entrée d'air du ventilateur 14 au niveau des couches d'air chaud.

Un moteur électrique (non représenté) placé à l'extrémité supérieure du mât 13 permet la mise en rotation du ventilateur 14 sur un tour complet, c'est-à-dire 360°.

Ce ventilateur axial 14 est monté à l'extrémité du mât 13 par une liaison pivot pour pouvoir être incliné. Un actionneur (non représenté) tel qu'un système de vis sans fin ou un vérin, permet d'incliner le ventilateur axial 14.

Ce ventilateur 14 est pourvu au niveau de sa sortie, d'un embout 17 de forme évasée notamment de forme conique ou tronconique, afin d'accélérer le flux d'air éjecté par ce ventilateur 14 et le projeter au plus loin.

Ce châssis 10 comprend également un générateur d'air chaud 15, lequel est relié et en communication de fluide avec un conduit d'alimentation 16 souple.

L'autre extrémité de ce conduit 16 est positionnée directement au niveau de l'entrée d'air du ventilateur 14 et est entraînée en rotation autour du mât avec le ventilateur 14 de manière à suivre ce dernier. Ainsi, cette extrémité supérieure ouverte du conduit 16 autorise un mélange de l'air chaud produit par le générateur 15 avec de l'air frais, au niveau de l'entrée d'air du ventilateur 14.

La Figure 2 est une vue en perspective d'un module de protection contre le gel selon un second mode de réalisation de la présente invention.

Les éléments portant les mêmes références que ceux illustrés à la Fig. 1 représentent les mêmes objets, lesquels ne seront pas décrits à nouveau ci-après.

Le module transportable illustré à Fig. 2 diffère de celui représenté à la Fig. 1 en ce que le conduit d'alimentation 16 en air chaud est relié directement à la sortie d'air du ventilateur 14, ici à son embout conique 17.

De l'air chaud produit par le générateur d'air chaud 15 est ainsi acheminé par le conduit d'alimentation 16 au niveau de la sortie d'air du ventilateur 14 pour y être mélangé avec de l'air aspiré au niveau de l'entrée d'air du ventilateur 14.

Les Figures 3 et 4 représentent un module de protection contre le gel selon un troisième mode de réalisation de la présente invention.

Les éléments du module transportable illustré aux Fig. 3 et 4 portant les mêmes références que ceux du module transportable représenté à la Fig. 1 représentent les mêmes objets, lesquels ne seront pas décrits à nouveau ci-après.

Le module transportable représenté aux Fig. 3 et 4 diffère de celui illustré à la Fig. 1 en ce que le ventilateur axial 14 n'est plus monté à l'extrémité d'un mât, mais est reçu sur une table élévatrice à double ciseaux 30, ces derniers étant superposés.

Avantageusement, la table élévatrice est configurée pour permettre la mise en rotation du ventilateur axial 14, de préférence sur un tour complet (360°), ainsi que son inclinaison vers le bas pour orienter le flux d'air le flux d'air refoulé par ce ventilateur vers le sol.

Cette table élévatrice comporte au moins un actionneur 31, tel qu'un vérin hydraulique, pour déplacer les ciseaux et ainsi permettre d'abaisser et/ou d'élever un plateau porte charge 32 supportant directement le ventilateur 14.

De manière plus générale, cette table élévatrice pourrait comporter un ou plusieurs ciseaux tels que deux ou trois ciseaux superposés.

Comme illustré à la Fig. 4, l'extrémité supérieure ouverte du conduit 16, est placée à proximité de l'entrée d'air du ventilateur 14, pour assurer un mélange de l'air chaud produit par le générateur 15 avec de l'air frais aspiré au niveau de l'entrée d'air du ventilateur 14.

Le pavillon d'aspiration 33 de ce ventilateur axial 14 présente au niveau de l'entrée d'air, une forme courbe qui permet d'augmenter la portée de l'air refoulé par le ventilateur 14 axial.

De manière avantageuse, un manchon 34 de section semi-circulaire, droite ou de préférence inclinée, placé à la sortie du ventilateur 14, permet de diriger, ou de plaquer, le flux d'air refoulé par ce ventilateur vers le sol.

Avec une telle configuration, on constate non seulement une plus grande concentration du flux d'air refoulé au sol, mais également sur une zone de traitement plus étendue.

La vitesse de rotation maximale du ventilateur, de l'ordre de 1500 tr/min, et le diamètre de la virole de l'ordre de 900 à 1000 mm permettent de maximiser le débit d'air (jusqu'à 60 000 m³/h) avec un faible bruit.

Le châssis 10 du module transportable est également configuré pour être relié à un attelage trois-points d'un tracteur afin d'assurer pour permettre son déplacement notamment dans l'inter-rang.

Alternativement, le dispositif de génération d'un flux d'air guidé 14 pourrait encore comprendre une ou plusieurs micro-turbines.

## Revendications

1. Module pour la protection d'une surface cultivée contre le gel, telle que des vignes ou des vergers, ladite surface cultivée comprenant des rangs d'arbres ou d'arbustes espacés les uns des autres d'une distance d, dénommée inter-rang, ledit module comprenant :
- un châssis (10) transportable, dimensionné pour permettre son passage dans l'inter-rang, ledit châssis (10) comprenant une surface d'appui au sol et des jambes d'appui (12) mobiles entre une position déployée dans laquelle elles sont en contact avec le sol pour stabiliser ledit châssis (10) et une position relevée lorsque le module doit être déplacé vers un autre lieu,
- ledit châssis (10) supportant un mât (13), ou une table élévatrice (30), à l'extrémité libre duquel, ou respectivement de laquelle, est placé un dispositif de génération d'un flux d'air guidé (14), et
- ledit châssis (10) comprenant un générateur d'air chaud (15), ledit générateur d'air chaud (15) étant relié et en communication de fluide avec un conduit d'alimentation (16), dont l'extrémité supérieure est directement connectée à l'entrée d'air, ou à la sortie d'air, dudit dispositif de génération d'un flux d'air guidé (14) pour alimenter ce dernier en air chaud, ou encore débouche au niveau de ladite entrée d'air, ou respectivement de ladite sortie d'air, de manière à assurer un mélange d'air frais et chaud au niveau de l'entrée d'air, ou respectivement de ladite sortie d'air, dudit dispositif de génération d'un flux d'air (14).

2. Module selon la revendication 1, **caractérisé en ce que** ledit module est configuré de sorte que ledit dispositif de génération d'un flux d'air guidé (14) est mobile en rotation sur une plage d'angles de rotation comprise entre 0° et 120°, encore mieux entre 0° et 180°, et de manière encore plus préférentielle, entre 0° et 360° autour de l'axe du mât (13) ou d'un axe principal de ladite table élévatrice (30).

3. Module selon la revendication 1 ou 2, **caractérisé en ce que** ledit dispositif de génération d'un flux d'air (14) est inclinable vers le bas.

4. Module selon la revendication 2 ou 3, **caractérisé en ce que** ledit conduit d'alimentation est flexible et dimensionné pour suivre ledit dispositif de génération d'un flux d'air guidé (14) dans sa mobilité.

5. Module selon l'une quelconque des revendications précédentes, **caractérisé en ce que** ledit châssis (10) formant un caisson ouvert, ledit générateur d'air chaud (15) est placé à l'intérieur dudit caisson.

6. Module selon l'une quelconque des revendications précédentes, **caractérisé en ce que** ledit générateur d'air chaud (15) comporte une source de chaleur et au moins un ventilateur pour assurer un échange thermique entre l'air brassé par ledit au moins un ventilateur et ladite source de chaleur.

7. Module selon la revendication 6, **caractérisé en ce que** ladite source de chaleur est choisie dans le groupe comprenant un échangeur, un brûleur ou un élément électrique chauffant.

8. Module selon l'une quelconque des revendications précédentes, **caractérisé en ce que** ledit châssis (10) comporte au moins une source d'alimentation en énergie embarquée pour alimenter au moins ledit générateur d'air chaud de sorte que ledit module est autonome.

9. Module selon les revendications 6 et 8, **caractérisé en ce que** ladite source de chaleur étant un brûleur à bois, il comporte un réservoir à bois tel qu'un silo pour le stockage de granulés et/ou de ceps de vigne.

10. Module selon l'une quelconque des revendications précédentes, **caractérisé en ce que** la surface d'appui dudit châssis (10) est dimensionnée pour assurer le non-enfoncement dudit module sur des sols instables.

11. Module selon l'une quelconque des revendications précédentes, **caractérisé en ce que** le dispositif de génération d'un flux d'air (14) est un ventilateur ou comporte une ou plusieurs micro-turbines.

12. Module selon la revendication 11, **caractérisé en ce que** ledit ventilateur (14) est un ventilateur à vitesse variable.

13. Module selon l'une quelconque des revendications précédentes, **caractérisé en ce que** la hauteur dudit mât (13) ou de ladite table élévatrice (30) est déterminée de sorte que ledit ventilateur (14) est placé au-dessus des arbres ou arbustes de ladite surface cultivée.

14. Module selon l'une quelconque des revendications précédentes, **caractérisé en ce que** ledit mât (13) est un mât télescopique.

15. Installation pour le traitement d'une surface cultivée comprenant une pluralité de modules selon l'une quelconque des revendications 1 à 14.

## Patentansprüche

1. Modul zum Schutz einer Anbaufläche vor Frost, wie Weinberge oder Obstgärten, wobei die Anbaufläche Reihen von Bäumen oder Sträuchern umfasst, die voneinander um einen Abstand d, genannt Zwischenreihe, beabstandet sind, wobei das Modul umfasst :
- ein transportables Gestell (10), das so bemessen ist, dass es seinen Durchgang durch die Zwischenreihe ermöglicht, wobei das Gestell (10) eine Bodenauflagefläche und Stützbeine (12) umfasst, die zwischen einer ausgefahrenen Position, in der sie den Boden berühren, um das Gestell (10) zu stabilisieren, und einer angehobenen Position, wenn das Modul an einen anderen Ort gebracht werden muss, beweglich sind, - wobei das Gestell (10) einen Mast (13) oder einen Hubtisch (30) trägt, an dessen bzw. deren freiem Ende eine Vorrichtung zur Erzeugung eines geführten Luftstroms (14) angeordnet ist, und
- wobei das Gestell (10) einen Heißlufterzeuger (15) umfasst, wobei der Heißlufterzeuger (15) mit einem Versorgungskanal (16) verbunden ist und mit diesem in Fluidverbindung steht, dessen oberes Ende direkt mit dem Lufteinlass oder dem Luftauslass der Vorrichtung (14) zur Erzeugung eines geführten Luftstroms verbunden ist, um letztere mit Heißluft zu versorgen, oder an dem Lufteinlass bzw. dem Luftauslass mündet, um eine Mischung aus frischer und warmer Luft an dem Lufteinlass bzw. dem Luftauslass der Vorrichtung zur Erzeugung eines Luftstroms (14) zu gewährleisten.

2. Modul nach Anspruch 1, **dadurch gekennzeichnet, dass** das Modul so konfiguriert ist, dass die Vorrichtung (14) zur Erzeugung eines geführten Luftstroms über einen Drehwinkelbereich zwischen 0° und 120°, noch besser zwischen 0° und 180°, und noch bevorzugter zwischen 0° und 360° um die Achse des Mastes (13) oder eine Hauptachse des Hubtisches (30) drehbar ist.

3. Modul nach Anspruch 1 oder 2, **dadurch gekennzeichnet, dass** die Vorrichtung zur Erzeugung eines Luftstroms (14) nach unten neigbar ist.

4. Modul nach Anspruch 2 oder 3, **dadurch gekennzeichnet, dass** die Zuführleitung flexibel und so dimensioniert ist, dass sie der Vorrichtung zur Erzeugung eines geführten Luftstroms (14) in ihrer Beweglichkeit folgt.

5. Modul nach einem der vorhergehenden Ansprüche, **dadurch gekennzeichnet, dass** das Gestell (10) einen offenen Kasten bildet, wobei der Heißluftgenerator (15) im Inneren des Kastens angeordnet ist.

6. Modul nach einem der vorhergehenden Ansprüche, **dadurch gekennzeichnet, dass** der Warmlufterzeuger (15) eine Wärmequelle und mindestens ein Gebläse umfasst, um einen Wärmeaustausch zwischen der von dem mindestens einen Gebläse umgewälzten Luft und der Wärmequelle zu gewährleisten.

7. Modul nach Anspruch 6, **dadurch gekennzeichnet, dass** die Wärmequelle aus der Gruppe ausgewählt ist, die aus einem Wärmetauscher, einem Brenner oder einem elektrischen Heizelement besteht.

8. Modul nach einem der vorhergehenden Ansprüche, **dadurch gekennzeichnet, dass** das Chassis (10) mindestens eine bordeigene Energiequelle zur Versorgung mindestens des Heißlufterzeugers aufweist, so dass das Modul autonom ist.

9. Modul nach den Ansprüchen 6 und 8, **dadurch gekennzeichnet, dass** die Wärmequelle ein Holzbrenner ist und es einen Holzspeicher wie ein Silo zur Lagerung von Pellets und/oder Weinreben umfasst.

10. Modul nach einem der vorhergehenden Ansprüche, **dadurch gekennzeichnet, dass** die Auflagefläche des Rahmens (10) so bemessen ist, dass sichergestellt ist, dass das Modul auf instabilen Böden nicht einsinkt.

11. Modul nach einem der vorhergehenden Ansprüche, **dadurch gekennzeichnet, dass** die Vorrichtung zur Erzeugung eines Luftstroms (14) ein Ventilator ist oder eine oder mehrere Mikroturbinen umfasst.

12. Modul nach Anspruch 11, **dadurch gekennzeichnet, dass** der Lüfter (14) ein Lüfter mit variabler Geschwindigkeit ist.

13. Modul nach einem der vorhergehenden Ansprüche, **dadurch gekennzeichnet, dass** die Höhe des Mastes (13) oder des Hubtisches (30) so bestimmt wird, dass der Ventilator (14) über den Bäumen oder Sträuchern der Anbaufläche angeordnet ist.

14. Modul nach einem der vorhergehenden Ansprüche, **dadurch gekennzeichnet, dass** der Mast (13) ein teleskopischer Mast ist.

15. Anlage zur Behandlung einer Anbaufläche, die eine Vielzahl von Modulen nach einem der Ansprüche 1 bis 14 umfasst.

## Claims

1. Module for protecting a cultivated area against frost, such as vineyards or orchards, said cultivated area comprising rows of trees or shrubs spaced apart from one another by a distance d, called the inter-row, said module comprising :
- a transportable frame (10), sized to allow it to pass through the inter-row, said frame (10) comprising a surface for resting on the ground and support legs (12) movable between a deployed position in which they are in contact with the ground to stabilise said frame (10) and a raised position when the module is to be moved to another location, - said chassis (10) supporting a mast (13), or a lifting table (30), at the free end of which, or respectively of which, is placed a device for generating a flow of guided air (14), and
- said chassis (10) comprising a hot air generator (15), said hot air generator (15) being connected and in fluid communication with a supply duct (16), the upper end of which is directly connected to the air inlet, or to the air outlet, of said device for generating a guided air flow (14) in order to supply the latter with hot air, or opens out at the level of the said air inlet, or respectively the said air outlet, so as to ensure a mixture of fresh and hot air at the level of the air inlet, or respectively the said air outlet, of the said device for generating a flow of air (14).

2. Module according to claim 1, **characterised in that** said module is configured so that said device for generating a guided air flow (14) is rotatable over a range of angles of rotation of between 0° and 120°, even better between 0° and 180°, and even more preferably, between 0° and 360° about the axis of the mast (13) or a main axis of said lifting table (30).

3. Module according to claim 1 or 2, **characterized in that** said air flow generating device (14) is tiltable downwards.

4. Module according to claim 2 or 3, **characterized in that** said supply duct is flexible and dimensioned to follow said device for generating a guided air flow (14) in its mobility.

5. Module according to any one of the preceding claims, **characterized in that** said chassis (10) forming an open box, said hot air generator (15) is placed inside said box.

6. Module according to any one of the preceding claims, **characterized in that** said hot air generator (15) comprises a heat source and at least one fan to ensure heat exchange between the air circulated by said at least one fan and said heat source.

7. A module as claimed in claim 6, **characterized in that** said heat source is selected from the group comprising an exchanger, a burner or an electrical heating element.

8. Module according to any one of the preceding claims, **characterized in that** said chassis (10) comprises at least one on-board energy supply source for supplying at least said hot air generator so that said module is autonomous.

9. Module according to claims 6 and 8, **characterized in that**, as the said heat source is a wood burner, it comprises a wood reservoir such as a silo for storing pellets and/or vines.

10. Module according to any one of the preceding claims, **characterized in that** the bearing surface of said chassis (10) is dimensioned to ensure that said module does not sink into unstable ground.

11. Module according to any one of the preceding claims, **characterized in that** the device for generating a flow of air (14) is a fan or comprises one or more micro-turbines.

12. Module according to claim 11, **characterized in that** said fan (14) is a variable speed fan.

13. Module according to any one of the preceding claims, **characterized in that** the height of said mast (13) or said lifting table (30) is determined so that said fan (14) is placed above the trees or shrubs of said cultivated area.

14. Module according to any one of the preceding claims, **characterized in that** said mast (13) is a telescopic mast.

15. Installation for treating a cultivated surface comprising a plurality of modules according to any one of claims 1 to 14.
